# EUROPÄISCHE PATENTSCHRIFT

(11) **EP 3 983 777 B1**
(45) Veröffentlichungstag und Bekanntmachung des Hinweises auf die Patenterteilung: **31.07.2024**
(21) Anmeldenummer: 20745080.0
(22) Anmeldetag: 10.06.2020
(51) Int. Cl.: G01M 17/06, B60W 30/18, B60W 40/09, B60W 40/10

(54) **VERFAHREN UND KONTROLLVORRICHTUNG ZUM KONTROLLIEREN EINES FAHRZEUGS**
METHOD AND CONTROL DEVICE FOR CONTROLLING A VEHICLE
PROCÉDÉ ET DISPOSITIF DE CONTRÔLE POUR CONTRÔLER UN VÉHICULE

(30) Priorität: 13.06.2019 AT 505312019
(43) Veröffentlichungstag der Anmeldung: 20.04.2022
(73) Patentinhaber: AVL List GmbH, 8020 Graz (AT)
(72) Erfinder: LEMMERER, David, 8160 Weiz (AT); GIGERL, Hans Peter, 8061 Gutenberg-Stenzengreith (AT); JANY-LUIG, Johannes, 8043 Graz (AT)
(74) Vertreter: Mathys & Squire
(86) Internationale Anmeldenummer: PCT/AT2020/060238
(87) Internationale Veröffentlichungsnummer: WO 2020/247997

(56) Entgegenhaltungen:
- WO-A1-2013/095237
- WO-A1-2018/054914
- AT-A4- 520 179
- DE-A1- 102006 038 004
- DE-A1- 102008 043 979
- DE-A1- 102015 202 397
- DE-A1- 4 103 579
- US-A- 5 430 645

## Beschreibung

Die vorliegende Erfindung betrifft ein Verfahren zum Betreiben eines Fahrermodells zum Kontrollieren eines Fahrzeugs, eine Kontrollvorrichtung zum Kontrollieren eines Fahrzeugs, die Verwendung der Kontrollvorrichtung zur Durchführung eines Testlaufs für ein Fahrzeug und ein Computerprogrammprodukt.

Im Stand der Technik werden zum Kontrollieren eines Fahrzeugs, bspw. zum Durchführen eines Testlaufs, Fahrermodelle verwendet, die jeweilige Pedale des Fahrzeugs mittels Kontrollbefehlen derart einstellen, dass eine Differenz zwischen einer aktuellen Fahrzeuggeschwindigkeit und einer geforderten Fahrzeuggeschwindigkeit minimal wird. Dabei wird die aktuelle Fahrzeuggeschwindigkeit lediglich unter Verwendung der Pedale des Fahrzeugs, die abwechselnd betätigt werden, verändert. Bei einer derartigen Einstellung einer Fahrzeuggeschwindigkeit ergibt sich insbesondere im Hinblick auf einen Kraftstoffverbrauch und einen Schadstoffausstoß ein suboptimales Fahrzeugverhalten.

Die AT520179 A4 offenbart ein Verfahren zum Betreiben eines Fahrermodells zum Kontrollieren eines Fahrzeugs auf einem Prüfstand. Aufgabe der vorgestellten Erfindung ist es, der voranstehend beschriebenen Problematik zumindest teilweise Rechnung zu tragen. Insbesondere ist es Aufgabe der vorliegenden Erfindung, eine Möglichkeit für einen im Hinblick auf einen Kraftstoffverbrauch und einen Schadstoffausstoß optimierten Betrieb eines Fahrzeugs unter Verwendung eines automatischen Fahrermodells zur Kontrolle des Fahrzeugs bereitzustellen.

Die voranstehende Aufgabe wird durch die Patentansprüche gelöst. Insbesondere wird die voranstehende Aufgabe durch den jeweiligen Gegenstand der unabhängigen Patentansprüche gelöst. Weitere Vorteile der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zum Betreiben eines Fahrermodells zum Kontrollieren eines Fahrzeugs auf einem Prüfstand vorgestellt. Dabei ist vorgesehen, dass durch das Fahrermodell ein Fahrzeugstatus des Fahrzeugs aus einer Anzahl Fahrzeugstati durch einen Abgleich eines aktuellen Zustands des Fahrzeugs mit mindestens einer für einen jeweiligen Fahrzeugstatus vorgegeben Auswahlbedingung ausgewählt und aktiviert wird, wobei die Anzahl Fahrzeugstati mindestens einen ersten Fahrzeugstatus und einen zweiten Fahrzeugstatus umfasst. Weiterhin ist vorgesehen, dass das Fahrermodell beim Aktivieren eines jeweiligen Fahrzeugstatus mindestens einen dem Fahrzeugstatus zugeordneten Kontrollbefehl zum Ändern einer Einstellung des Fahrzeugs freigibt, wobei durch das Fahrermodell eine Vielzahl von Wechseln zwischen einem aktuell aktivierten Fahrzeugstatus und mindestens einem weiteren Fahrzeugstatus vorgenommen wird und bei mindestens einem Wechsel der Vielzahl von Wechseln vor einer jeweiligen Aktivierung des weiteren Fahrzeugstatus durch das Fahrermodell ein Segelstatus aktiviert wird, in dem das Fahrzeug gleitet.

Bei der Anwendung eines Fahrermodells im Sinne der vorliegenden Erfindung auf einem Prüfstand wird insbesondere die Geschwindigkeit des Fahrzeugs betrachtet. Je nach abzufahrendem Testzyklus erfolgt hierzu die Vorgabe einer Soll-Geschwindigkeit, welche sich zeitlich ändert und damit auch als Soll-Geschwindigkeitsverlauf beschrieben werden kann. Um den Testzyklus zu absolvieren, erfolgt eine Kontrolle der Geschwindigkeit des Fahrzeugs mittels dessen Fahrpedal und dessen Bremspedal. Wie im Testbetrieb dient dabei eine Betätigung des Fahrpedals einer Erhöhung der Ist-Geschwindigkeit in quantitativer Weise und eine Betätigung des Bremspedals einer entsprechenden Reduktion der Ist-Geschwindigkeit in quantitativer Weise. Bei der Durchführung einer solchen Geschwindigkeitskontrolle soll der Verlauf der Ist-Geschwindigkeit dem Verlauf der Soll-Geschwindigkeit so genau wie möglich folgen. Insbesondere sind Grenzabweichungen vorgegeben, zum Beispiel in Form einer unteren Grenzlinie und einer oberen Grenzlinie, welche eine maximale und nicht zu überschreitende Abweichung von der Soll-Geschwindigkeit darstellen. Der Verlauf der Soll-Geschwindigkeit und der Verlauf der Ist-Geschwindigkeit sind daher nicht deckungsgleich, sondern unterscheiden sich voneinander. Je nach Qualität der Kontrollfunktion und/oder des Fahrermodells ist der Unterschied zwischen den beiden Verläufen unterschiedlich groß.

Unter dem Begriff "gleiten" eines Fahrzeugs ist im Kontext der vorliegenden Offenbarung ein Fahrzustand zu verstehen, bei dem vom Fahrer oder einem Assistenzsystem weder eine Antriebsleistung noch eine Bremsleistung angefordert wird. Der Fahrer betätigt also weder das Fahrpedal noch das Bremspedal. Insbesondere wird durch einen Betriebszustand "gleiten" bzw. einen Fahrer, der ein Fahrzeug gleiten lässt, nicht festgelegt, ob zur Reduktion eines Schleppmoments im Antriebsstrang Trennelemente geöffnet werden.

Unter einem "Fahrzeugstatus" ist im Kontext der vorliegenden Offenbarung eine vorgegebene Einstellung eines Fahrzeugs zu verstehen.

Unter einer "Freigabe" eines Kontrollbefehls ist im Kontext der vorliegenden Offenbarung ein Vorgang zu verstehen, bei dem ein Kontrollbefehl erzeugt bzw. einer Kontrollinstanz bereitgestellt wird, so dass die Kontrollinstanz einen durch den Kontrollbefehl vorgegebenen Kontrollvorgang durchführt.

Unter einem Wechsel zwischen verschiedenen Fahrzeugstati ist im Kontext der vorliegenden Offenbarung ein Vorgang zu verstehen, bei dem ein aktueller Fahrzeugstatus deaktiviert und ein weiterer Fahrzeugstatus aktiviert wird.

Das vorgestellte Verfahren dient insbesondere zum automatischen Durchführen eines Testlaufs für ein Fahrzeug auf einem Prüfstand mit optimaler Kraftstoffeffizienz und/oder minimalem Schadstoffausstoß. Dazu ist erfindungsgemäß vorgesehen, dass das Fahrzeug unter Verwendung einer Vielzahl an Fahrzeugstati betrieben wird.

Durch den erfindungsgemäß vorgesehenen Segelstatus, in dem ein jeweiliges Fahrzeug gleitet und entsprechend kraftstoffeffizient und/oder schadstoffoptimiert betrieben wird, steht neben den herkömmlich verwendeten Stellelementen Fahrpedal und Bremse ein weiteres Stellelement zur Verfügung, mittels dessen eine Fahrzeuggeschwindigkeit des Fahrzeugs angepasst werden kann. Entsprechend ist insbesondere vorgesehen, dass beim Betreiben eines Fahrzeugs unter Verwendung des erfindungsgemäßen Verfahrens das Fahrzeug so oft und/oder so lange im Segelstatus betrieben wird, wie es unter Berücksichtigung einer vorgegebenen Zielleistungsvorgabe, wie bspw. einer vorgegebenen Zielgeschwindigkeit, möglich ist.

Der erfindungsgemäß vorgesehene Segelstatus ermöglicht es ein Fahrzeug ohne Verwendung eines Fahrpedals bzw. eines Bremspedals und entsprechend auch ohne Einsatz von Antriebsenergie bzw. Bremsenergie gemäß einer vorgegebenen Zielleistungsanforderung zu betreiben. Dazu kann das Fahrzeug bspw. so lange im Segelstatus betrieben werden, bis sich eine Geschwindigkeit des Fahrzeugs über einen vorgegebenen Toleranzwert hinaus von einer vorgegebenen Zielgeschwindigkeit entfernt bzw. in einem vorgegebenen Zeitfenster entfernen wird. Es ist erfindungsgemäß vorgesehen, dass durch das Fahrermodell eine Vielzahl von Wechseln zwischen einem jeweilig aktivierten Fahrzeugstatus und mindestens einem weiteren Fahrzeugstatus vorgenommen wird und bei mindestens einem Wechsel der Vielzahl von Wechseln vor einer jeweiligen Aktivierung des weiteren Fahrzeugstatus durch das Fahrermodell ein Segelstatus aktiviert wird.

Zum Wechseln zwischen jeweiligen Fahrzeugstati kann ein Zustandsautomat verwendet werden, der einen aktuellen Zustand eines jeweiligen Fahrzeugs ermittelt und diesen mit einer jeweiligen vorgegebenen Zielleistungsvorgabe abgleicht und anhand der Differenz des Zustands des Fahrzeugs und der Zielleistungsvorgabe einen jeweiligen Fahrzeugstatus auswählt und aktiviert bzw. einstellt.

Ein Zustandsautomat, der zum Wechseln zwischen verschiedenen Fahrzeugstati verwendet werden kann, kann bspw. als Kontrollgerät, insbesondere als Zentralkontrollgerät ausgestaltet sein oder mit einem Zentralkontrollgerät eines Fahrzeugs in kommunikativer Verbindung stehen, um dem Zentralkontrollgerät jeweilige einem zu aktivierenden Fahrzeugstatus zugeordnete Kontrollbefehle zu übermitteln. Insbesondere kann zum Durchführen des erfindungsgemäßen Verfahrens ein endlicher Zustandsautomat verwendet werden.

Erfindungsgemäß ist vorgesehen, dass bei jedem Wechsel einer Vielzahl von Wechseln oder im Wesentlichen bei jedem Wechsel der Vielzahl von Wechseln, insbesondere mit Ausnahme eines ersten Wechsels und eines letzten Wechsels einer jeweiligen Fahrt des Fahrzeugs, vor einer jeweiligen Aktivierung des weiteren Fahrzeugstatus durch das Fahrermodell der Segelstatus aktiviert wird.

Für einen kraftstoffeffizienten und/oder schadstoffoptimierten Betrieb eines Fahrzeugs hat es sich als vorteilhaft erwiesen, den erfindungsgemäß vorgesehenen Segelstatus möglichst häufig und/oder für eine möglichst lange Dauer zu aktivieren. Entsprechend kann zwischen einem Wechsel von einem ersten Fahrzeugstand zu einem weiteren Fahrzeugstand stets ein "Zwischenschalten" in den Segelstatus vorgesehen sein, so dass zunächst der erste Fahrzeugstatus deaktiviert, anschließend der Segelstatus aktiviert, nach bspw. einer vorgegebenen Dauer oder bei Erreichen eines vorgegebenen Fahrzustands durch das Fahrzeug, der Segelstatus deaktiviert und anschließend der weitere Fahrzeugstatus aktiviert wird.

Es ist insbesondere vorgesehen, dass bei einem ersten Wechsel und einem letzten Wechsel einer jeweiligen Fahrt eines jeweiligen Fahrzeugs kein Zwischenschalten in den Segelstatus erfolgt. Da in der Regel auf einen initialen Fahrzeugstatus "Stillstand" bzw. "Start" ein Fahrzeugstatus "Abfahrt" folgt, bei dem eine direkte bzw. unmittelbare Bereitstellung von Antriebsenergie erforderlich ist, ist in dieser Fahrsituation eine direkte Aktivierung des Fahrzeugstatus "Abfahrt" ohne eine vorherige Aktivierung des Segelstatus in der Regel am kraftstoffeffizientesten und/oder schadstoffärmsten.

Weiterhin ist es in der Regel vorteilhaft, ein Fahrzeug beim Übergang in einen Stillstand zum Beenden einer Fahrt abzubremsen, um einen definierten Streckenpunkt zu erreichen, so dass eine direkte Aktivierung eines Fahrzeugstatus "Bremsen bis zum Stillstand" ohne vorherige Aktivierung des Segelstatus vorteilhaft sein kann.

Es kann weiterhin vorgesehen sein, dass die erfindungsgemäß vorgesehene Anzahl Fahrzeugstati mindestens zwei der folgenden Fahrzeugstati umfasst: "Stillstand", "Abfahrt", "Beschleunigen", "Bremsen" und "Bremsen bis zum Stillstand", "Segeln", wobei bei einer Aktivierung des Fahrzeugstatus "Abfahrt" mindestens eine Bremse des Fahrzeugs gelöst und das Fahrzeug mit einer vorgegebenen Minimalstellung und/oder einer vorgegebenen Maximalstellung des Beschleunigungspedals bewegt wird.

Bei einer Aktivierung des Fahrzeugstatus "Bremsen" kann es vorgesehen sein, dass eine Bremse des Fahrzeugs aktiviert und ein Fahrpedal des Fahrzeugs lediglich bis zu einer vorgegebenen Maximalstellung bewegt werden kann.

Bei einer Aktivierung des Fahrzeugstatus "Bremsen bis zum Stillstand" kann es vorgesehen sein, dass das Fahrzeug gemäß einem vorgegebenen Prozedere, das bspw. eine kraftstoffoptimierte und/oder schadstoffminimierte Verzögerung bedingt, zum Stillstand gebracht wird.

Bei einer Aktivierung des Fahrzeugstatus "Beschleunigen" kann es vorgesehen sein, dass das Fahrzeug gemäß einem vorgegebenen Prozedere, das bspw. eine kraftstoffoptimierte und/oder schadstoffminimierte Beschleunigung bedingt, auf eine vorgegebene Zielgeschwindigkeit gebracht wird.

Durch Vorgeben einer Minimalstellung eines Fahrpedals für den Fahrzeugstatus "Abfahrt" kann ein Fahrzeug schnell in Bewegung versetzt werden, was ggf. kraftstoffeffizienter sein kann als ein langsames Beschleunigen.

Durch Vorgeben einer Maximalstellung eines Fahrpedals für den Fahrzeugstatus "Abfahrt" können unnötige Beschleunigungsstöße, die ggf. mittels eines Bremsmanövers korrigiert werden müssen, vermieden werden.

Es kann weiterhin vorgesehen sein, dass bei Aktivierung des Segelstatus durch das Fahrermodell die folgenden Schritte durchgeführt werden:
a) Ermitteln einer vorgegebenen Zielleistungsverlaufskurve für das Fahrzeug,
b) Bestimmen eines Toleranzbandes für die Zielleistungsverlaufskurve, wobei das Toleranzband durch eine obere Grenzlinie und eine untere Grenzlinie beschränkt wird, wobei die obere Grenzlinie anhand eines Verlaufs der Zielleistungsverlaufskurve zuzüglich eines vorgegebenen oberen Toleranzwerts bestimmt wird, und wobei die untere Grenzlinie anhand des Verlaufs der Zielleistungsverlaufskurve abzüglich eines vorgegebenen unteren Toleranzwerts bestimmt wird,
c) Bestimmen einer Erwartungskennlinie für eine in der Zukunft zu erwartende Leistung des Fahrzeugs durch Extrapolieren einer Leistungsentwicklung des Fahrzeugs bei einer aktuellen Einstellung des Fahrzeugs für ein Vorhersagefenster mit einer vorgegebenen zeitlichen Länge, wobei die Bedingungen zum Aktivieren des weiteren Fahrzeugstatus umfassen, dass die Erwartungskennlinie zumindest eine der oberen Grenzlinie und der unteren Grenzlinie des Toleranzbandes innerhalb des zeitlichen Vorhersagfensters schneidet.

Durch Verwendung eines Toleranzbandes und einer Erwartungskennlinie kann ein zukünftiges Verhalten eines jeweiligen Fahrzeugs vorhergesagt bzw. geschätzt und in Relation zu einer vorgegeben Zielleistungsanforderung gesetzt werden, so dass bspw. so lange wie eine jeweilige Erwartungskennlinie ein jeweiliges Toleranzband nicht schneidet, ein Fahrzeug in einem jeweiligen Fahrzeugstatus, wie bspw. dem Segelstatus betrieben werden kann. Entsprechend ermöglicht die Verwendung des Toleranzbandes und der Erwartungskennlinie eine dynamische Bestimmung einer Dauer für die ein jeweiliger Fahrzeugstatus aktiviert bleiben kann.

Es kann weiterhin vorgesehen sein, dass für den Fall, dass die Erwartungskennlinie die obere Grenzlinie schneidet, ein Fahrzeugstatus freigeschaltet wird, in dem eine Bremse des Fahrzeugs aktiviert wird, und für den Fall, dass die Erwartungskennlinie die untere Grenzlinie schneidet, ein Fahrzeugstatus freigeschaltet wird, in dem ein Antrieb des Fahrzeugs zum Beschleunigen aktiviert wird.

Es kann weiterhin vorgesehen sein, dass die folgenden Bedingungen zur Aktivierung des Fahrzeugstatus Stillstand erfüllt sein müssen: vorgegebene Geschwindigkeit entspricht "0" und aktuelle Geschwindigkeit ist kleiner als ein vorgegebener Stillstandsschwellenwert und/oder die folgenden Bedingungen zur Aktivierung des Fahrzeugstatus Bremsen erfüllt sein müssen: aktueller Beschleunigungswert entspricht "0", Aktivierung der Bremse des Fahrzeugs ist freigeschaltet und Bremse ist geöffnet, und/oder die folgenden Bedingungen zur Aktivierung des Fahrzeugstatus Beschleunigen erfüllt sein müssen: Aktivierung des Antriebs des Fahrzeugs zum Beschleunigen ist freigeschaltet, vorgegebene Geschwindigkeit ist größer als eine vorgegebene Kriechgeschwindigkeit, und/oder die folgenden Bedingungen zur Aktivierung des Fahrzeugstatus Abfahrt erfüllt sein müssen: vorgegebene Geschwindigkeit ist größer "0" oder die Bremse ist geöffnet.

Ferner kann vorgesehen sein, dass zum Aktivieren des Fahrzeugstatus Beschleunigen folgende Bedingung erfüllt sein muss: aktuelle Zielgeschwindigkeit ist größer als eine vorgegebene Kriechgeschwindigkeit.

Ferner kann vorgesehen sein, dass zum Aktivieren des Fahrzeugstatus Bremsen erfüllt sein muss: aktuelle Zielgeschwindigkeit ist kleiner als eine vorgegebene Kriechgeschwindigkeit.

Es kann weiterhin vorgesehen sein, dass ein Initialisierungsmodul einen aktuellen Zustand eines jeweiligen Fahrzeugs ermittelt und den ermittelten Zustand einem jeweiligen Fahrzeugstatus auf Grundlage der folgenden Bedingungen zuordnet:
Kondition 1: vorgegebene Geschwindigkeit ist gleich "0" und aktuelle Geschwindigkeit ist größer als ein vorgegebener Stillstandsschwellenwert, d.h. ein Schwellenwert einer Geschwindigkeit die als Stillstand gewertet wird.
Kondition 2: Aktueller Beschleunigungswert ist größer "0" und vorgegebene Geschwindigkeit ist größer als ein vorgegebener Stillstandsschwellenwert.
Kondition 3: Bremsenaktivität ist größer "0" und vorgegebene Geschwindigkeit ist größer als ein vorgegebener Stillstandsschwellenwert.

Dabei sind die Konditionen 1 bis 3 bspw. einem Initialisierungsmodul zugeordnet, das dazu dient, das Fahrzeug in einem Zustand zu regeln, in dem das Fahrermodell aktiviert wird. Da sich das Fahrzeug in jedem Zustand befinden kann, wenn das Fahrermodell aktiviert wird, ist vorgesehen, dass beim Aktivieren des Fahrermodells durch das Initialisierungsmodul ermittelt wird, welcher Zustand zuerst aktiviert wird. Dabei bilden die Konditionen 1 bis 3 die folgenden Fahrzustände ab:
Kondition 1: Fahrzeug soll stehen, und steht annähernd
Kondition 2: Fahrzeug soll fahren und ist zu langsam
Kondition 3: Fahrzeug soll fahren oder stehenbleiben und ist zu schnell

Es kann weiterhin vorgesehen sein, dass ein einem jeweiligen Fahrzeugstatus zugeordneter Kontrollbefehl einen Pedalregler mindestens eines Pedals eines jeweiligen Fahrzeugs freischaltet.

Um eine Veränderung einer Einstellung eines jeweiligen Fahrzeugs, die einem jeweiligen zu aktivierenden Fahrzeugstatus entspricht, zu erreichen, kann ein Pedalregler verwendet werden, der mindestens ein Pedal des Fahrzeugs regelt. Entsprechend kann eine Regelung des Pedalreglers, die einem zu aktivierenden Fahrzeugstatus entgegenwirkt, dadurch vermieden werden, dass der Pedalregler durch einen durch den zu aktivierenden Fahrzeugstatus vorgegebenen Kontrollbefehl freigegeben wird und ansonsten von einer Regelung der Pedale ausgenommen ist.

Es kann weiterhin vorgesehen sein, dass mindestens ein einem jeweiligen Fahrzeugstatus zugeordneter Kontrollbefehl einen Pedalregler lediglich eines Pedals eines jeweiligen Fahrzeugs freischaltet.

Durch eine Beschränkung einer Freischaltung einer Regelung auf lediglich einen Pedalregler kann eine Überregelung, bei der bspw. ein Fahrpedal und ein Bremspedal mit hoher Frequenz abwechselnd aktiviert werden, und ein dadurch bedingter kraftstoffineffizienter und/oder schadstoffreicher Betrieb eines entsprechenden Fahrzeugs vermieden werden.

Es kann weiterhin vorgesehen sein, dass ein Betrieb des Fahrzeugs durch Verwendung der Fahrzeugstati im laufenden Betrieb des Fahrzeugs aktiviert oder deaktiviert werden kann.

Das vorgestellte Verfahren kann im laufenden Betrieb eines Fahrzeugs, d.h. während einer Fahrt dynamisch aktiviert oder deaktiviert werden. Entsprechend kann bspw. vorgesehen sein, dass ein Fahrzeug manuell von einem Fahrer in einen Fahrzustand versetzt wird und anschließend automatisch mittels des erfindungsgemäßen Fahrermodells unter Verwendung der erfindungsgemäß vorgesehenen Fahrzeugstati betrieben wird.

Es kann weiterhin vorgesehen sein, dass bei einem Wechsel von dem Segelstatus in einen weiteren Fahrzeugstatus eine definierte Stellung des Fahrpedals und/oder des Bremspedals als Startwert gewertet wird.

Durch einen dynamischen Startwert, d.h. eine Anpassung einer Nullstellung eines Pedals bei einem Wechsel von dem Segelstatus in einen weiteren Fahrzeugstatus, kann ein besonders weicher Übergang in eine Beschleunigungs- bzw. eine Bremsphase erreicht werden, da ein "Einschwingen" in einen aktuelle Fahrzustand ausgehend von einer absoluten Nullstellung eines jeweiligen Pedals vermieden wird.

Es kann weiterhin vorgesehen sein, dass das Verfahren unter Verwendung eines Kontrolltaktes durchgeführt wird, der einen zeitlichen Mindestabstand zur Durchführung einer eines Wechsels von einem Fahrzeugstatus in einen weiteren Fahrzeugstatus vorgibt, und wobei mindestens ein Kontrolltakt zwischen einem Wechsel von einem Fahrzeugstatus in den Segelstatus und von dem Segelstatus zu einem weiteren Fahrzeugstatus liegt.

Ein Kontrolltakt kann bspw. ein zeitlicher Abstand zwischen zwei Kontrollvorgängen sein und zwischen mehreren Sekunden und einigen Millisekunden, bevorzugt zwischen 2 Sekunden und 10 Millisekunden, besonders bevorzugt zwischen 1 Sekunde und 50 Millisekunden, insbesondere 100 Millisekunden dauern. Entsprechend wird durch das Vorsehen eines Kontrolltaktes zwischen einem Wechsel vom dem Segelstatus zu einem weiteren Fahrzeugstatus eine Mindestdauer vorgegeben, für die der Segelstatus aktiviert bleibt, so dass jede Aktivierung des Segelstatus ein Minimum an Kraftstoffeinsparung und/oder Schadstoffreduktion bedingt.

Es kann weiterhin vorgesehen sein, dass für den Fall, dass sich ein Fahrzeug in dem Fahrzeugstatus "Stillstand" befindet, ein Bremspedal des Fahrzeugs mit einem vorgegebenen Mindestwert bewegt wird, um eine Start/Stopp Funktion zu aktivieren.

Da eine Start/Stopp Funktion erheblichen Einfluss auf eine Kraftstoffeffizient und/oder einen Schadstoffausstoß eines Fahrzeugs hat, ist eine Aktivierung einer solchen Funktion bei einer Kontrolle eines Fahrzeugs unter Verwendung des vorgestellten Verfahrens besonders vorteilhaft.

In einem zweiten Aspekt betrifft die vorgestellte Erfindung eine Kontrollvorrichtung zum Kontrollieren eines Fahrzeugs, wobei die Kontrollvorrichtung mindestens eine Recheneinheit umfasst. Die mindestens eine Recheneinheit umfasst mindestens ein Fahrermodul zum Aktivieren eines Fahrzeugstatus eines Fahrzeugs aus einer Anzahl Fahrzeugstati, das dazu konfiguriert ist, einen aktuellen Zustand des Fahrzeugs mit mindestens einer für einen jeweiligen Fahrzeugstatus vorgegeben Auswahlbedingung abzugleichen, in Abhängigkeit des Abgleichs einen jeweiligen Fahrzeugstatus auszuwählen und zu aktivieren, wobei die Anzahl Fahrzeugstati mindestens einen ersten Fahrzeugstatus und einen zweiten Fahrzeugstatus umfasst, wobei das Fahrermodul weiterhin dazu konfiguriert ist, eine Vielzahl von Wechseln zwischen einem aktuell aktivierten Fahrzeugstauts und einem weiteren Fahrzeugstatus vorzunehmen und bei mindestens einem Wechsel der Vielzahl Wechsel vor einer jeweiligen Aktivierung des weiteren Fahrzeugstatus durch das Fahrermodul einen Segelstatus zu aktivieren, in dem das Fahrzeug gleitet,
ein Freigabemodul, das dazu konfiguriert ist, beim Aktivieren eines jeweiligen Fahrzeugstatus durch das Fahrermodul mindestens einen dem Fahrzeugstatus zugeordneten Kontrollbefehl zum Ändern einer Einstellung des Fahrzeugs freizugeben.

Damit bringt die erfindungsgemäße Kontrollvorrichtung die gleichen Vorteile mit sich, wie sie ausführlich mit Bezug auf das erfindungsgemäße Verfahren beschrieben worden sind.

In einem dritten Aspekt betrifft die vorgestellte Erfindung die Verwendung der vorgestellten Kontrollvorrichtung zur Durchführung eines Testlaufs für ein Fahrzeug.

In einem vierten Aspekt betrifft die vorgestellte Erfindung ein Computerprogrammprodukt umfassend Programmcodemittel, die einen Computer dazu konfigurieren, alle Schritte gemäß dem vorgestellten Verfahren durchzuführen, wenn die Programmcodemittel auf einem Computer ausgeführt werden.

Das Computerprogrammprodukt kann als computerlesbarer Anweisungscode in jeder geeigneten Programmiersprache wie beispielsweise in JAVA oder C++ implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie das Kontrollgerät derart programmieren, dass die gewünschten Funktionen ausgeführt werden. Ferner kann das Computerprogrammprodukt in einem Netzwerk wie beispielsweise dem Internet bereitgestellt werden bzw. sein, von dem es bei Bedarf von einem Nutzer heruntergeladen werden kann. Das Computerprogrammprodukt kann sowohl mittels eines Computerprogramms, d. h. einer Software, als auch mittels einer oder mehrerer spezieller elektronischer Schaltungen, d.h. in Hardware, oder in beliebig hybrider Form, d. h. mittels Software-Komponenten und Hardware-Komponenten, realisiert werden bzw. sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine mögliche Ausgestaltung des erfindungsgemäßen Verfahrens.
- Figur 2: eine Visualisierung eines Ablaufs einer Kontrolle eines Fahrzeugs gemäß einer möglichen Ausgestaltung des erfindungsgemäßen Verfahrens.
- Figur 3: eine mögliche Ausgestaltung der erfindungsgemäßen Kontrollvorrichtung.
- Figur 4: eine mögliche Ausgestaltung eines Zustandsautomaten zur Durchführung des erfindungsgemäßen Verfahrens.

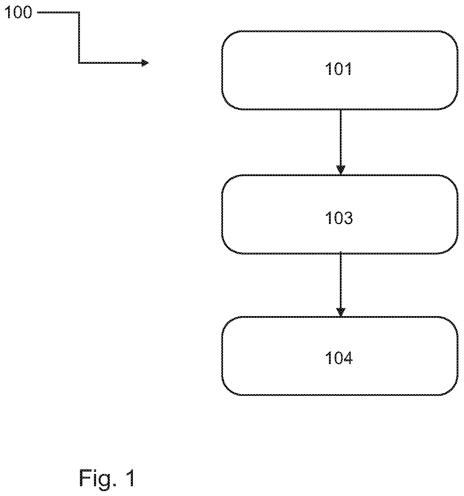

In Fig. 1 ist schematisch ein Ablauf 100 einer möglichen Ausgestaltung des vorgestellten Verfahrens dargestellt.

In einem Abgleichschritt 101 wird durch ein Fahrermodell, d.h. bspw. ein Computerprogramm zum Kontrollieren eines Fahrzeugs, ein aktueller Zustand eines Fahrzeugs ermittelt, indem bspw. von jeweiligen Sensoren ermittelte Fahrdaten des Fahrzeugs aus einem Kontrollgerät des Fahrzeuges geladen und ausgewertet werden. Der aktuelle Zustand des Fahrzeugs wird anschließend durch das Fahrermodell mit mindestens einer für einen jeweiligen Fahrzeugstatus vorgegeben Auswahlbedingung abgeglichen. Dabei kann eine Auswahlbedingung bspw. ein vorgegebener Wert für einen Messwert eines Sensors des Fahrzeugs und/oder eine vorgegebene Zielleistungsanforderung, wie bspw. eine einzustellende Fahrzeuggeschwindigkeit sein.

Für den Fall, dass der aktuelle Zustand des Fahrzeugs mit sämtlichen Auswahlbedingungen, die einem jeweiligen Fahrzeugstatus zugeordnet sind, übereinstimmt, wird der Fahrzeugstatus aus einer Vielzahl Fahrzeugstati ausgewählt und in einem Aktivierungsschritt 103 aktiviert.

Es ist vorgesehen, dass für den Fall, dass ein erster Fahrzeugstatus, wie bspw. ein Fahrzeugstatus "Beschleunigen" beendet und ein weiterer Fahrzeugstatus, wie bspw. ein Fahrzeugstatus "Bremsen" zu aktivieren ist, ein Segelstatus aktiviert wird, nachdem der Fahrzeugstatus "Beschleunigen" deaktiviert und bevor der Fahrzeugstatus "Bremsen" aktiviert wird. Entsprechend wird der Segelstatus "zwischengeschaltet". Während der Segelstatus aktiviert ist, wird das Fahrzeug in derart eingestellt, dass das Fahrzeug gleitet, d.h. antriebsfrei und brems- bzw. verzögerungsfrei, rollt.

In einem Freigabeschritt 105 werden einem jeweiligen aktivierten Fahrzeugstatus zugeordnete Kontrollbefehle freigegeben und ggf. entsprechende Steller, wie bspw. Aktuatoren zum Bewegen jeweiliger Pedale des Fahrzeugs mittels der Kontrollbefehle kontrolliert.

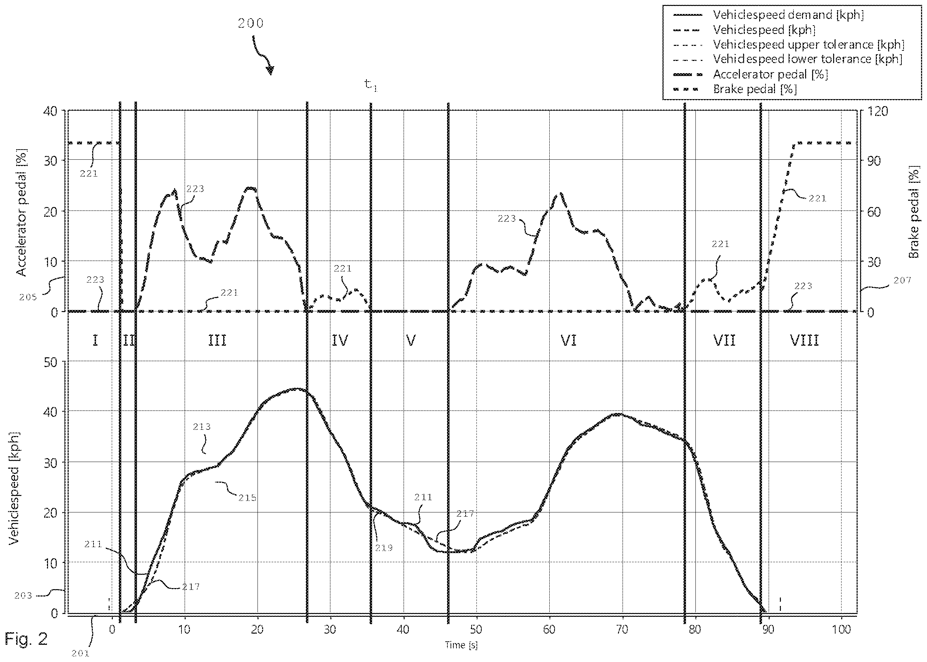

In Fig. 2 ist ein Diagramm 200 dargestellt, das sich auf der Abszisse 201 über die Zeit in [Sekunden] und auf einer ersten Ordinate 203 über eine angeforderte Fahrzeuggeschwindigkeit in [km/h] und über eine gemessene Fahrzeuggeschwindigkeit in [km/h], auf einer zweiten Ordinate 205 über eine Fahrpedalstellung in [%], auf einer dritten Ordinate 207 über eine Bremspedalstellung in [%]aufspannt. Dabei weist das Diagramm insbesondere zwei unterschiedliche Geschwindigkeitsverläufe auf. Zum einen handelt es sich hierbei um den mit durchgezogener Linie dargestellten Zielleistungsvorgabeverlauf 211, welcher auch als Geschwindigkeitsvorgabe für das Fahrzeug und/oder als Soll-Geschwindigkeit bezeichnet werden kann. Zum anderen ist in dem Diagramm ein Fahrzeuggeschwindigkeitsverlauf 217 mit gestrichelter Linie dargestellt, welcher sich von dem Zielleistungsvorgabeverlauf 211 unterscheidet und zum Beispiel als aktuelle Geschwindigkeit oder als Ist-Geschwindigkeit des Fahrzeugs bezeichnet werden kann. Durch die Kontrolle des Fahrzeugs wird versucht den Fahrzeuggeschwindigkeitsverlauf 217 möglichst nahe an dem Zielleistungsvorgabeverlauf 211 zu halten. Als Kontrollgrenzen sind hier die obere Grenzlinie 213 und die untere Grenzlinie 215 mit gepunkteten Linien dargestellt. Der als durchgezogene Linie dargestellte Zielleistungsvorgabeverlauf 211 einer Zielleistungsanforderung, kann bspw. durch einen Test zum Ermitteln von Schadstoffemissionen vorgegeben sein.

Ein Bremspedalverlauf 221 zeigt, als kurz gestrichelt gezeichnete Linie, einen Verlauf einer Position eines Bremspedals des Fahrzeugs.

Ein Fahrpedalverlauf 223 zeigt, als lang gestrichelt gezeichnete Linie, einen Verlauf einer Position eines Fahrpedals des Fahrzeugs.

Ferner sind in Fig. 2 Fahrzustände I bis X, jeweils getrennt durch eine gepunktete Linie, eingezeichnet, wobei folgendes gilt:
I = Stillstand
II = Anfahrt
III = Beschleunigen
IV = Bremsen
V = Segeln
VI = Beschleunigen
VII = Bremsen
VIII = Stillstand

Im Zustand I wird das Bremspedal des Fahrzeugs in einer Weise betätigt, wie durch den Bremspedalverlauf 221 im Zustand I angedeutet, dass sich das Fahrzeug nicht bewegt. Dieser Zustand entspricht dem Stillstand des Fahrzeugs, welches durch die Betätigung des Bremspedals gegen ein Wegrollen gesichert ist. Das Fahrpedal ist in diesem Zustand I nicht betätigt.

Im Zustand II wird das Bremspedal des Fahrzeugs gelöst, wie durch den Bremspedalverlauf 221 während des Zustands II dargestellt ist. Das Fahrzeug beginnt zu kriechen. Das Fahrpedal ist hierbei immer noch nicht betätigt. Dieser Zustand II kann als Kriechzustand bezeichnet werden und ist zum Beispiel bei Automatikfahrzeugen bekannt. Der Fahrzeuggeschwindigkeitsverlauf 217 zeigt durch den Anstieg diesen Beginn der Bewegung des Fahrzeugs an. Um dem Anstieg des Zielleistungsvorgabeverlaufs 211 zu folgen, reicht für den ersten Anfahrvorgang das reine Lösen des Bremspedals aus.

Im Zustand III ist das Bremspedal vollständig gelöst und das Fahrpedal des Fahrzeugs wird betätigt, um das Fahrzeug zu beschleunigen, wie durch den Fahrpedalverlauf 223 im Zustand III dargestellt. Das Bremspedal ist nicht betätigt und befindet sich in einer Ruheposition, wie durch den Bremspedalverlauf 221 im Zustand III dargestellt. Um also dem weiteren Anstieg der Geschwindigkeit nach dem Zielleistungsvorgabeverlauf zu folgen, wird das Fahrpedal weiter betätigt gemäß dem Fahrpedalverlauf 223. Das Fahrzeug beschleunigt weiter, sodass der Fahrzeuggeschwindigkeitsverlauf 217 dem Zielleistungsvorgabeverlauf 211 innerhalb der Grenzlinien 213 und 215 folgt

Im Zustand IV soll nach der Vorgabe durch den Zielleistungsvorgabeverlauf 211 die Fahrzeuggeschwindigkeit reduziert werden. Dazu wird das Bremspedal des Fahrzeugs betätigt, wie durch den Bremspedalverlauf 221 im Zustand IV dargestellt, während das Fahrpedal zuvor gelöst wurde, wie durch den Fahrpedalverlauf 223 vor dem Zustand IV dargestellt. Im Ergebnis folgt der Fahrzeuggeschwindigkeitsverlauf 217 dem abnehmenden Zielleistungsvorgabeverlauf 211 im Zustand IV.

Im Zustand V werden weder das Bremspedal noch das Fahrpedal des Fahrzeugs betätigt, wie durch den auf der Abszisse 201 verlaufenden Fahrpedalverlauf 223 und den auf der Abszisse 201 verlaufenden Bremspedalverlauf 221 im Zustand V dargestellt. Entsprechend gleitet das Fahrzeug im Zustand V. Während des Gleitzustandes reduziert sich die Ist-Geschwindigkeit des Fahrzeugs gemäß dem Fahrzeuggeschwindigkeitsverlauf 217, welcher dem ebenfalls sinkenden Zielleistungsvorgabeverlauf 211 folgt. Die Änderung der Geschwindigkeit wird also ohne jegliche Pedalbetätigung im Zustand V erreicht, und so wird eine reale, manuelle Kontrollsituation durch einen realen Fahrer nachgebildet. Für eine moderate Reduktion der Geschwindigkeit ist für einen effizienten Fahrer kein aktives Bremsen notwendig. Ein Gleitzustand, in welchem durch Fahrwiderstände des Fahrzeugs, wie zum Beispiel Rollreibung an den Rädern oder Luftwiderstand des Fahrzeugs, eine moderate Bremswirkung erzielt wird, reicht hier für ein Folgen des Zielleistungsvorgabeverlaufs 211 aus.

Im Zustand VI wird das Fahrpedal des Fahrzeugs wieder betätigt, um das Fahrzeug zu beschleunigen, wie durch den Fahrpedalverlauf 223 im Zustand VI dargestellt, während das Bremspedal nicht betätigt wird bzw. sich in einer Ruheposition befindet, wie durch den Bremspedalverlauf 221 im Zustand VI dargestellt. Im Zustand VI führt die unterschiedliche starke Betätigung des Fahrpedals zu einer Beschleunigung oder auch aufgrund der Fahrwiderstände zu Reduktion der Ist-Geschwindigkeit des Fahrzeugs gemäß dem Fahrzeuggeschwindigkeitsverlauf 217. Dieser Zustand VI entspricht als Beschleunigungszustand also im Wesentlichen dem Zustand III.

Im Zustand VII wird das Bremspedal des Fahrzeugs betätigt, wie durch den Bremspedalverlauf 221 im Zustand VII dargestellt, während das Fahrpedal gelöst bleibt, wie durch den Fahrpedalverlauf 223 im Zustand VII dargestellt. Damit wird hier ein Bremszustand wie im Zustand IV erzeugt.

Im Zustand VIII wird das Bremspedal des Fahrzeugs stärker betätigt, wie durch den Bremspedalverlauf 221 im Zustand VIII dargestellt, während des Fahrpedal des Fahrzeugs nicht betätigt wird bzw. sich in einer Ruheposition befindet, wie durch den auf der Abszisse 201 verlaufenden Fahrpedalverlauf 223 im Zustand VIII dargestellt. Das Fahrzeug wird bis in den Stillstand abgebremst und wird nun durch das gedrückte Bremspedal in diesem Stillstand gesichert. Eine Änderung des Fahrzeuggeschwindigkeitsverlaufs 217 erfolgt hier nicht mehr. Zu einem aktuellen Zeitpunkt t1 zu Beginn des Zustands V wird eine gestrichelt dargestellte Erwartungskennline 219 ausgehend von einer zum Zeitpunkt t1 aktuellen Fahrzeuggeschwindigkeit gebildet. Die Erwartungskennlinie 219 wird bspw. anhand von Geschwindigkeitswerten zum Zeitpunkt t1 und ggf. historischen Geschwindigkeiten ausgehend vom Zeitpunkt t1, bspw. historische Geschwindigkeiten im Bereich 0,2 Sekunden vor Zeitpunkt t1 bis zum Zeitpunkt t1 bzw. deren Steigungsfunktion, und unter der Annahme, das ein Verhalten des Fahrzeugs konstant bleibt, für ein Zeitfenster von bspw. 4 Sekunden extrapoliert. Sollte die Erwartungskennline 219, wie vorliegend der Fall, weder die obere Grenzlinie 213 noch die untere Grenzlinie 215 schneiden, kann ein aktuell in dem Fahrzeug aktivierter Fahrzeugstatus, insbesondere der Segelstatus aktiviert bleiben.

Dementsprechend entspricht während des Zustands V der eingetretene Fahrzeuggeschwindigkeitsverlauf 217 der zuvor gebildeten Erwartungskennlinie 219.

Sollte die Erwartungskennlinie 219 die obere Grenzlinie 213 schneiden, ist ein Geschwindigkeitsüberschuss des Fahrzeugs bzgl. der Zielleistungsanforderung in der Zukunft zu erwarten, so dass ein Fahrzeugstatus zu aktivieren ist, in dem das Fahrzeug verzögert wird.

Sollte die Erwartungskennlinie 219 die untere Grenzlinie 215 schneiden, ist ein Geschwindigkeitsmangel des Fahrzeugs bzgl. der Zielleistungsanforderung in der Zukunft zu erwarten, so dass ein Fahrzeugstatus zu aktivieren ist, in dem das Fahrzeug beschleunigt wird.

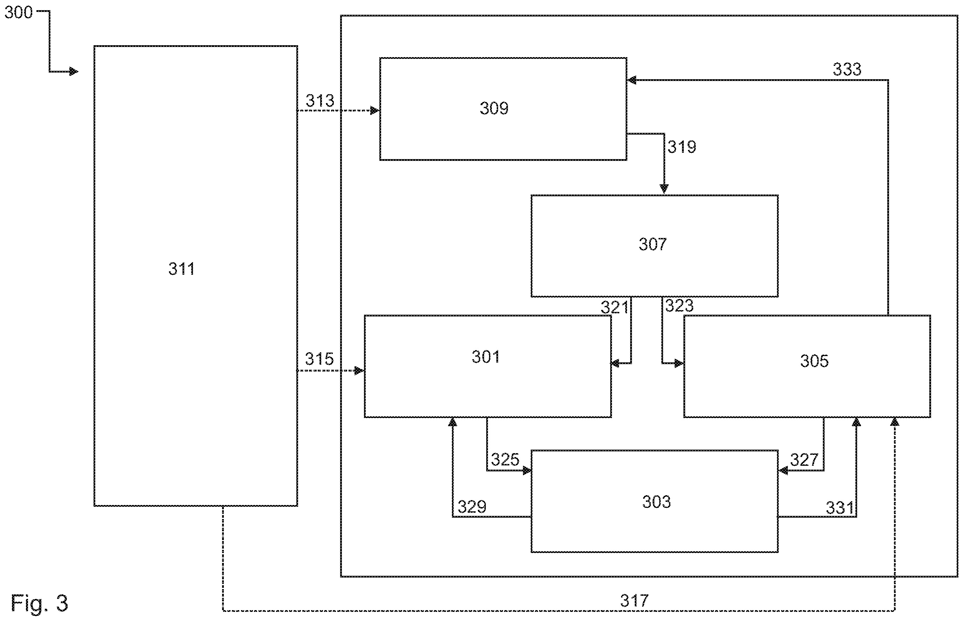

In Figur 3 ist ein Zustandsautomat 300 dargestellt.

Der Zustandsautomat 300 umfasst sämtliche Fahrzeugstati "Beschleunigen" 301, "Segeln" 303, "Bremsen" 305, "Anfahren" 307 und "Stillstand" 309 einer möglichen Ausgestaltung des vorgestellten Verfahrens.

Ferner umfasst der Zustandsautomat 300 ein Initialisierungsmodul 311, das bei Aktivierung des vorgestellten Verfahrens einen aktuellen Zustand eines jeweiligen Fahrzeugs auswertet und einem Fahrzeugstatus der Fahrzeugstati "Beschleunigen" 301, "Segeln" 303, "Bremsen" 305, "Anfahren" 307 und "Stillstand" 309 zuordnet, wie durch eine erste Linie 313, eine zweite Linie 315 und eine dritte Linie 317 angedeutet.

Ausgehend von einem durch das Initialisierungsmodul 311 aktivierten Fahrzeugstatus werden in Abhängigkeit eines Zustands des Fahrzeugs und jeweiliger Zielleistungsanforderungen die Fahrzeugstati "Beschleunigen" 301, "Segeln" 303, "Bremsen" 305, "Anfahren" 307 und "Stillstand" 309 aktiviert, wie durch einen ersten Pfeil 319, einen zweiten Pfeil 321, einen dritten Pfeil 323, einen vierten Pfeil 325, einen fünften Pfeil 327, einen sechsten Pfeil 329, einen siebten Pfeil 331 und einen achten Pfeil 333 angedeutet. Vorzugsweise erfolgt hier ein Wechsel von dem Fahrzeugstatus "Beschleunigen" 301 zu dem Fahrzeugstatus "Bremsen" 305 und umgekehrt stets über den Fahrzeugstatus "Segeln" 303.

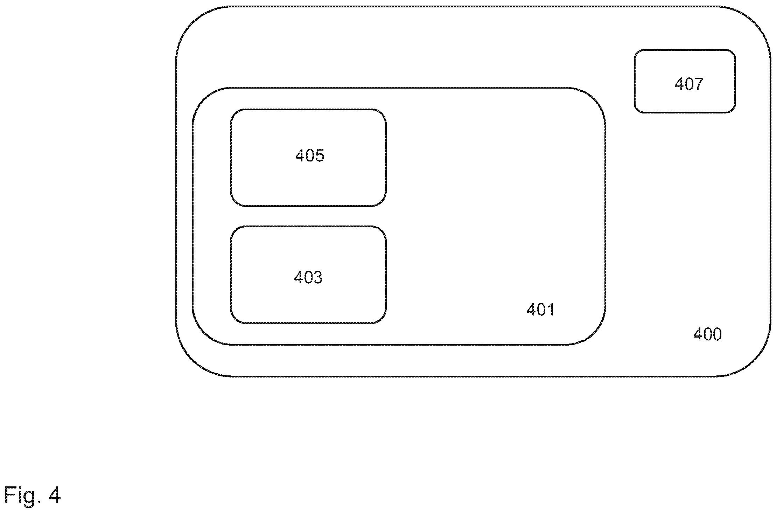

In Figur 4 ist eine Kontrollvorrichtung 400 dargestellt. Die Kontrollvorrichtung 400 umfasst eine Recheneinheit 401 umfasst.

Die Recheneinheit umfasst ein Fahrermodul 403 zum Aktivieren eines Fahrzeugstatus eines Fahrzeugs aus einer Anzahl Fahrzeugstati, das dazu konfiguriert ist, einen aktuellen Zustand des Fahrzeugs mit mindestens einer für einen jeweiligen Fahrzeugstatus vorgegeben Auswahlbedingung abzugleichen, in Abhängigkeit des Abgleichs einen jeweiligen Fahrzeugstatus auszuwählen und zu aktivieren, wobei die Anzahl Fahrzeugstati mindestens einen ersten Fahrzeugstatus und einen zweiten Fahrzeugstatus umfasst.

Das Fahrermodul 403 ist weiterhin dazu konfiguriert, eine Vielzahl von Wechseln zwischen einem aktuell aktivierten Fahrzeugstauts und einem weiteren Fahrzeugstatus vorzunehmen und bei mindestens einem Wechsel der Vielzahl Wechsel vor einer jeweiligen Aktivierung des weiteren Fahrzeugstatus durch das Fahrermodul 403 einen Segelstatus zu aktivieren, in dem das Fahrzeug gleitet.

Weiterhin umfasst die Recheneinheit 401 ein Freigabemodul 405, das dazu konfiguriert ist, beim Aktivieren eines jeweiligen Fahrzeugstatus durch das Fahrermodul mindestens einen dem Fahrzeugstatus zugeordneten Kontrollbefehl zum Ändern einer Einstellung des Fahrzeugs freizugeben.

Ferner umfasst die Kontrollvorrichtung 400 eine Schnittstelle 407, die kabelgebunden oder als Drahtlosschnittstelle ausgestaltet sein kann und die in kommunikativer Verbindung zu einem jeweiligen zu kontrollierenden Fahrzeug steht, um Kontrollbefehle an das Fahrzeug zu übermitteln.

### Bezugszeichenliste

- 100: Ablauf
- 101: Abgleichschritt
- 103: Aktivierungsschritt
- 105: Freigabeschritt
- 200: Diagramm
- 201: Abszisse
- 203: erste Ordinate
- 205: zweite Ordinate
- 207: dritte Ordinate
- 211: Zielleistungsvorgabeverlauf
- 213: obere Grenzlinie
- 215: untere Grenzlinie
- 217: Fahrzeuggeschwindigkeitsverlauf
- 219: Erwartungskennlinie
- 221: Bremspedalverlauf
- 223: Fahrpedalverlauf
- 300: Zustandsautomat
- 301: Fahrzeugstatus "Beschleunigen"
- 303: Fahrzeugstatus "Segeln"
- 305: Fahrzeugstatus "Bremsen"
- 307: Fahrzeugstatus "Anfahren"
- 309: Fahrzeugstatus "Stillstand"
- 311: Initialisierungsmodul
- 313: erste Linie
- 315: zweite Linie
- 317: dritte Linie
- 319: erster Pfeil
- 321: zweiter Pfeil
- 323: dritter Pfeil
- 325: vierter Pfeil
- 327: fünfter Pfeil
- 329: sechster Pfeil
- 331: siebter Pfeil
- 333: achter Pfeil
- 400: Kontrollvorrichtung
- 401: Recheneinheit
- 403: Fahrermodul
- 405: Freigabemodul
- 407: Schnittstelle

## Patentansprüche

1. Verfahren zum Betreiben eines Fahrermodells zum Kontrollieren eines
Fahrzeugs auf einem Prüfstand, wobei
durch das Fahrermodell ein Fahrzeugstatus (301, 303, 305, 307, 309) des Fahrzeugs aus einer Anzahl Fahrzeugstati (301, 303, 305, 307, 309) durch einen Abgleich eines aktuellen Zustands des Fahrzeugs mit mindestens einer für einen jeweiligen Fahrzeugstatus (301, 303, 305, 307, 309) vorgegeben Auswahlbedingung ausgewählt und aktiviert wird, wobei
die Anzahl Fahrzeugstati (301, 303, 305, 307, 309) mindestens einen ersten Fahrzeugstatus (301, 303, 305, 307, 309) und einen zweiten Fahrzeugstatus (301, 303, 305, 307, 309) umfasst, und wobei
das Fahrermodell beim Aktivieren eines jeweiligen Fahrzeugstatus (301, 303, 305, 307, 309) mindestens einen dem Fahrzeugstatus (301, 303, 305, 307, 309) zugeordneten Kontrollbefehl zum Ändern einer Einstellung des Fahrzeugs freigibt, wobei
durch das Fahrermodell eine Vielzahl von Wechseln zwischen einem aktuell aktivierten Fahrzeugstatus (301, 303, 305, 307, 309) und mindestens einem weiteren Fahrzeugstatus (301, 303, 305, 307, 309) vorgenommen wird und
bei mindestens einem Wechsel der Vielzahl von Wechseln vor einer jeweiligen Aktivierung des weiteren Fahrzeugstatus (301, 303, 305, 307, 309) durch das Fahrermodell ein Segelstatus (303) aktiviert wird, in dem das Fahrzeug gleitet, **dadurch gekennzeichnet, dass**
bei jedem Wechsel der Vielzahl von Wechseln oder im Wesentlichen bei jedem Wechsel der Vielzahl von Wechseln, insbesondere mit Ausnahme eines ersten Wechsels und eines letzten Wechsels einer jeweiligen Fahrt des Fahrzeugs, vor einer jeweiligen Aktivierung des weiteren Fahrzeugstatus (301, 303, 305, 307, 309) durch das Fahrermodell der Segelstatus (303) aktiviert wird.

2. Verfahren nach Anspruch 1, **dadurch gekennzeichnet, dass**
die Anzahl Fahrzeugstati (301, 303, 305, 307, 309) mindestens zwei der folgenden Fahrzeugstati (301, 303, 305, 307, 309) umfasst: "Stillstand" (309), "Anfahrt" (307), "Beschleunigen" (301) und "Bremsen" (305), wobei bei einer Aktivierung des Fahrzeugstatus "Anfahrt" (307) mindestens eine Bremse des Fahrzeugs gelöst und das Fahrzeug mit einer vorgegebenen Minimalstellung und/oder einer vorgegebenen Maximalstellung des Beschleunigungspedals bewegt wird.

3. Verfahren nach einem der Ansprüche 1 oder 2, **dadurch gekennzeichnet, dass** bei Aktivierung des Segelstatus (303) durch das Fahrermodell die folgenden Schritte durchgeführt werden:
a) Ermitteln einer vorgegebenen Zielleistungsverlaufskurve (211) für das Fahrzeug,
b) Bestimmen eines Toleranzbandes für die Zielleistungsverlaufskurve (211), wobei das Toleranzband durch eine obere Grenzlinie (213) und eine untere Grenzlinie (215) beschränkt wird, wobei die obere Grenzlinie (213) anhand eines Verlaufs der Zielleistungsverlaufskurve (211) zuzüglich eines vorgegebenen oberen Toleranzwerts bestimmt wird, und wobei die untere Grenzlinie (215) anhand des Verlaufs der Zielleistungsverlaufskurve (211) abzüglich eines vorgegebenen unteren Toleranzwerts bestimmt wird,
c) Bestimmen einer Erwartungskennlinie (219) für eine in der Zukunft zu erwartende Leistung des Fahrzeugs durch Extrapolieren einer Leistungsentwicklung des Fahrzeugs bei einer aktuellen Einstellung des Fahrzeugs für ein Vorhersagefenster mit einer vorgegebenen zeitlichen Länge, wobei
die Bedingungen zum Aktivieren des weiteren Fahrzeugstatus (301, 303, 305, 307, 309) umfassen, dass die Erwartungskennlinie (219) zumindest eine der oberen Grenzlinie (213) und der unteren Grenzlinie (215) des Toleranzbandes innerhalb des zeitlichen Vorhersagfensters schneidet.

4. Verfahren nach Anspruch 3, **dadurch gekennzeichnet, dass**
für den Fall, dass die Erwartungskennlinie (219) die obere Grenzlinie (213) schneidet, ein Fahrzeugstatus (301, 303, 305, 307, 309) freigeschaltet wird, in dem eine Bremse des Fahrzeugs aktiviert wird, und
für den Fall, dass die Erwartungskennlinie (219) die untere Grenzlinie (213) schneidet, ein Fahrzeugstatus (301, 303, 305, 307, 309) freigeschaltet wird, in dem ein Antrieb des Fahrzeugs zum Beschleunigen aktiviert wird.

5. Verfahren nach einem der Ansprüche 3 bis 4, **dadurch gekennzeichnet, dass**
die folgenden Bedingungen zur Aktivierung des Fahrzeugstatus Stillstand (309) erfüllt sein müssen: vorgegebene Geschwindigkeit entspricht "0" und aktuelle Geschwindigkeit ist kleiner als ein vorgegebener Stillstandsschwellenwert, und/oder die folgenden Bedingungen zur Aktivierung des Fahrzeugstatus Bremsen (305) erfüllt sein müssen: Aktueller Beschleunigungswert entspricht "0", Aktivierung der Bremse des Fahrzeugs ist freigeschaltet und Bremse ist geöffnet, und/oder
die folgenden Bedingungen zur Aktivierung des Fahrzeugstatus Beschleunigen (301) erfüllt sein müssen: Aktivierung des Antriebs des Fahrzeugs zum Beschleunigen ist freigeschaltet, vorgegebene Geschwindigkeit ist größer als eine vorgegebene Kriechgeschwindigkeit, und/oder
die folgenden Bedingungen zur Aktivierung des Fahrzeugstatus Anfahrt (307) erfüllt sein müssen: vorgegebene Geschwindigkeit ist größer "0" oder die Bremse ist geöffnet.

6. Verfahren nach einem der Ansprüche 1 bis 5, **dadurch gekennzeichnet, dass**
der mindestens eine einem jeweiligen Fahrzeugstatus zugeordnete Kontrollbefehl einen Pedalregler mindestens eines Pedals des Fahrzeugs freischaltet.

7. Verfahren nach einem der Ansprüche 1 bis 5, **dadurch gekennzeichnet, dass**
der mindestens eine einem jeweiligen Fahrzeugstatus zugeordnete Kontrollbefehl einen Pedalregler lediglich eines Pedals des Fahrzeugs freischaltet.

8. Verfahren nach einem der Ansprüche 1 bis 7, **dadurch gekennzeichnet, dass**
ein Betrieb des Fahrzeugs durch Verwendung der Fahrzeugstati (301, 303, 305, 307, 309) im laufenden Betrieb des Fahrzeugs aktiviert oder deaktiviert werden kann.

9. Verfahren nach Anspruch 8, **dadurch gekennzeichnet, dass**
bei einem Wechsel von dem Segelstatus (303) in einen weiteren Fahrzeugstatus eine definierte Stellung des Fahrpedals und/oder des Bremspedals als Startwert gewertet wird.

10. Verfahren nach einem der Ansprüche 1 bis 9, **dadurch gekennzeichnet, dass**
das Verfahren unter Verwendung eines Kontrolltaktes durchgeführt wird, der einen zeitlichen Mindestabstand zur Durchführung einer eines Wechsels von einem Fahrzeugstatus (301, 303, 305, 307, 309) in einen weiteren Fahrzeugstatus (301, 303, 305, 307, 309) vorgibt, und wobei
mindestens ein Kontrolltakt zwischen einem Wechsel von einem Fahrzeugstatus (301, 303, 305, 307, 309) in den Segelstatus (303) und von dem Segelstatus (303) zu einem weiteren Fahrzeugstatus (301, 303, 305, 307, 309) liegt.

11. Verfahren nach einem der Ansprüche 1 bis 10,
**dadurch gekennzeichnet, dass** für den Fall, dass sich ein Fahrzeug in dem Fahrzeugstatus "Stillstand" (309) befindet, ein Bremspedal des Fahrzeugs mit einem vorgegebenen Mindestwert bewegt wird, um eine Start/Stopp Funktion zu aktivieren.

12. Kontrollvorrichtung (400) zum Kontrollieren eines Fahrzeugs auf einem Prüfstand, wobei
die Kontrollvorrichtung mindestens eine Recheneinheit (401) umfasst, wobei die mindestens eine Recheneinheit umfasst:
ein Fahrermodul (403) zum Aktivieren eines Fahrzeugstatus (301, 303, 305, 307, 309) eines Fahrzeugs aus einer Anzahl Fahrzeugstati (301, 303, 305, 307, 309), das dazu konfiguriert ist, einen aktuellen Zustand des Fahrzeugs mit mindestens einer für einen jeweiligen Fahrzeugstatus (301, 303, 305, 307, 309) vorgegeben Auswahlbedingung abzugleichen, in Abhängigkeit des Abgleichs einen jeweiligen Fahrzeugstatus (301, 303, 305, 307, 309) auszuwählen und zu aktivieren, wobei
die Anzahl Fahrzeugstati (301, 303, 305, 307, 309) mindestens einen ersten Fahrzeugstatus (301, 303, 305, 307, 309) und einen zweiten Fahrzeugstatus (301, 303, 305, 307, 309) umfasst, wobei
das Fahrermodul (403) weiterhin dazu konfiguriert ist,
eine Vielzahl von Wechseln zwischen einem aktuell aktivierten Fahrzeugstatus (301, 303, 305, 307, 309) und einem weiteren Fahrzeugstatus (301, 303, 305, 307, 309) vorzunehmen und
bei mindestens einem Wechsel der Vielzahl Wechsel vor einer jeweiligen Aktivierung des weiteren Fahrzeugstatus (301, 303, 305, 307, 309) durch das Fahrermodul (403) einen Segelstatus (303) zu aktivieren, in dem das Fahrzeug gleitet, ein Freigabemodul (405), das dazu konfiguriert ist, beim Aktivieren eines jeweiligen Fahrzeugstatus (301, 303, 305, 307, 309) durch das Fahrermodul mindestens einen dem Fahrzeugstatus (301, 303, 305, 307, 309) zugeordneten Kontrollbefehl zum Ändern einer Einstellung des Fahrzeugs freizugeben, und
bei jedem Wechsel der Vielzahl von Wechseln oder im Wesentlichen bei jedem Wechsel der Vielzahl von Wechseln, insbesondere mit Ausnahme eines ersten Wechsels und eines letzten Wechsels einer jeweiligen Fahrt des Fahrzeugs, vor einer jeweiligen Aktivierung des weiteren Fahrzeugstatus (301, 303, 305, 307, 309) den Segelstatus (303) zu aktivieren.

13. Verwendung einer Kontrollvorrichtung nach Anspruch 12 zur Durchführung eines Testlaufs für ein Fahrzeug.

14. Computerprogrammprodukt umfassend Programmcodemittel, die einen Computer dazu konfigurieren, alle Schritte gemäß mindestens einem Verfahren der Ansprüche 1 bis 11 durchzuführen, wenn die Programmcodemittel auf einem Computer ausgeführt werden.

## Claims

1. Method for operating a driver model for controlling a
vehicle on a test bench, wherein
the driver model selects a vehicle status (301, 303, 305, 307, 309) of the vehicle is selected from a number of vehicle statuses (301, 303, 305, 307, 309) by comparing a current state of the vehicle with at least one selection condition specified for a respective vehicle status (301, 303, 305, 307, 309) and activates said vehicle status, wherein
the number of vehicle statuses (301, 303, 305, 307, 309) comprises at least a first vehicle status (301, 303, 305, 307, 309) and a second vehicle status (301, 303, 305, 307, 309), and wherein
the driver model enables at least one control command assigned to a respective vehicle status (301, 303, 305, 307, 309) for changing a setting of the vehicle when the vehicle status (301, 303, 305, 307, 309) is activated, wherein
the driver model performs a plurality of switches between a currently activated vehicle status (301, 303, 305, 307, 309) and at least one further vehicle status (301, 303, 305, 307, 309) and
a cruising status (303) in which the vehicle coasts is activated by the driver model in the event of at least one switch from among the plurality of switches prior to respective activation of the other vehicle status (301, 303, 305, 307, 309), **characterised in that**
the cruising status (303) is activated by the driver model each time there is a switch from among the plurality of switches or substantially each time there is a switch from among the plurality of switches, in particular with the exception of a first switch and a last switch of a respective journey of the vehicle, prior to respective activation of the other vehicle status (301, 303, 305, 307, 309).

2. Method according to claim 1, **characterised in that**
the number of vehicle statuses (301, 303, 305, 307, 309) comprises at least two of the following vehicle statuses (301, 303, 305, 307, 309): "standstill" (309), "move off" (307), "accelerate" (301) and "brake" (305), wherein at least one brake of the vehicle is released and the vehicle is moved with a specified minimum position and/or a specified maximum position of the acceleration pedal when the vehicle status "move off" (307) is activated.

3. Method according to any of claims 1 or 2, **characterised in that**
the following steps are carried out by the driver model when the cruising status (303) is activated:
a) ascertaining a specified target power curve (211) for the vehicle,
b) determining a tolerance range for the target power curve (211), wherein the tolerance range is limited by an upper boundary (213) and a lower boundary (215), wherein the upper boundary (213) is determined based on a course of the target power curve (211) plus a specified upper tolerance value, and wherein the lower boundary (215) is determined based on the course of the target power curve (211) minus a specified lower tolerance value,
c) determining an expected characteristic curve (219) for a power of the vehicle to be expected in the future by extrapolating a power progression of the vehicle at the current setting of the vehicle for a prediction window of a specified temporal length, wherein
the conditions for activating the other vehicle status (301, 303, 305, 307, 309) comprise the expected characteristic curve (219) intersecting at least one of the upper boundary (213) and the lower boundary (215) of the tolerance range within the temporal prediction window.

4. Method according to claim 3, **characterised in that**,
for the case where the expected characteristic curve (219) intersects the upper boundary (213), a vehicle status (301, 303, 305, 307, 309) in which a brake of the vehicle is activated is enabled, and
for the case where the expected characteristic curve (219) intersects the lower boundary (213), a vehicle status (301, 303, 305, 307, 309) in which a drive of the vehicle is activated for acceleration is enabled.

5. Method according to any of claims 3 to 4, **characterised in that**
the following conditions must be met for activating the vehicle status "standstill" (309): specified speed corresponds to "0" and current speed is less than a specified standstill threshold value, and/or the following conditions must be met for activating the vehicle status "brake" (305): current acceleration value corresponds to "0", activation of the brake of the vehicle is enabled and brake is open, and/or
the following conditions must be met for activating the vehicle status "accelerate" (301): activation of the drive of the vehicle for acceleration is enabled, specified speed is greater than a specified creeping speed, and/or
the following conditions must be met for activating the vehicle status "move off" (307): specified speed is greater than "0" or the brake is open.

6. Method according to any of claims 1 to 5, **characterised in that**
the at least one control command assigned to a respective vehicle status enables a pedal controller of at least one pedal of the vehicle.

7. Method according to any of claims 1 to 5, **characterised in that**
the at least one control command assigned to a respective vehicle status enables a pedal controller of only one pedal of the vehicle.

8. Method according to any of claims 1 to 7, **characterised in that**
operation of the vehicle can be activated or deactivated by using the vehicle statuses (301, 303, 305, 307, 309) during ongoing operation of the vehicle.

9. Method according to claim 8, **characterised in that**
a defined position of the accelerator pedal and/or brake pedal is counted as a starting value in the event of a switch from the cruising status (303) to another vehicle status.

10. Method according to any of claims 1 to 9, **characterised in that**
the method is carried out using a control cycle that specifies a minimum time interval for carrying out a switch from one vehicle status (301, 303, 305, 307, 309) to another vehicle status (301, 303, 305, 307, 309), and wherein
there is at least one control cycle between a switch from one vehicle status (301, 303, 305, 307, 309) to the cruising status (303) and from the cruising status (303) to another vehicle status (301, 303, 305, 307, 309).

11. Method according to any of claims 1 to 10,
**characterised in that**, for the case where a vehicle is in the vehicle status "standstill" (309), a brake pedal of the vehicle is moved by a specified minimum value in order to activate a start/stop function.

12. Control device (400) for controlling a vehicle on a test bench, wherein
the control device comprises at least one computing unit (401), wherein the at least one computing unit comprises:
a driver module (403) for activating a vehicle status (301, 303, 305, 307, 309) of a vehicle from a number of vehicle statuses (301, 303, 305, 307, 309), which driver module is configured to compare a current state of the vehicle with at least one selection condition specified for a respective vehicle status (301, 303, 305, 307, 309), to select and activate a respective vehicle status (301, 303, 305, 307, 309) depending on the comparison, wherein
the number of vehicle statuses (301, 303, 305, 307, 309) comprises at least a first vehicle status (301, 303, 305, 307, 309) and a second vehicle status (301, 303, 305, 307, 309), wherein
the driver module (403) is further configured to
perform a plurality of switches between a currently activated vehicle status (301, 303, 305, 307, 309) and another vehicle status (301, 303, 305, 307, 309) and
activate a cruising status (303) in which the vehicle coasts in the event of at least one switch from among the plurality of switches prior to respective activation of the other vehicle status (301, 303, 305, 307, 309) by the driver module (403), an enabling module (405) which is configured to enable at least one control command assigned to the vehicle status (301, 303, 305, 307, 309) for changing a setting of the vehicle when a respective vehicle status (301, 303, 305, 307, 309) is activated by the driver module (403), and
to activate the cruising status (303) each time there is a switch from among the plurality of switches or substantially each time there is a switch from among the plurality of switches, in particular with the exception of a first switch and a last switch of a respective journey of the vehicle, prior to respective activation of the other vehicle status (301, 303, 305, 307, 309).

13. Use of a control device according to claim 12 for carrying out a test run for a vehicle.

14. Computer program product comprising program code means which configure a computer to carry out all steps according to at least one method of claims 1 to 11 when the program code means are executed on a computer.

## Revendications

1. Procédé de mise en oeuvre d'un modèle de conducteur pour le contrôle d'un
véhicule sur un banc d'essai, dans lequel
un état de véhicule (301, 303, 305, 307, 309) est sélectionné et activé par le modèle de conducteur parmi un certain nombre d'états du véhicule (301, 303, 305, 307, 309) en comparant un état actuel du véhicule avec au moins une condition de sélection prédéfinie pour un état de véhicule respectif (301, 303, 305, 307, 309),
le nombre d'états du véhicule (301, 303, 305, 307, 309) comprenant au moins un premier état de véhicule (301, 303, 305, 307, 309) et un deuxième état de véhicule (301, 303, 305, 307, 309), dans lesquels
le modèle de conducteur, lors de l'activation d'un état de véhicule respectif (301, 303, 305, 307, 309), déclenche au moins un ordre de commande associé à l'état du véhicule (301, 303, 305, 307, 309), pour modifier un réglage du véhicule, dans lequel
le modèle de conducteur effectue une pluralité de changements entre un état de véhicule actuellement activé (301, 303, 305, 307, 309) et au moins un autre état de véhicule (301, 303, 305, 307, 309), et
le modèle de conducteur active un état de voile (303) dans lequel le véhicule glisse, pour au moins un changement de la pluralité de changements, avant une activation respective de l'autre état de véhicule (301, 303, 305, 307, 309) **caractérisé en ce que**
à chaque changement de la pluralité de changements ou sensiblement à chaque changement de la pluralité de changements, en particulier à l'exception d'un premier changement et d'un dernier changement d'un trajet respectif du véhicule, le modèle de conducteur active l'état de voile (303) avant une activation respective de l'autre état de véhicule (301, 303, 305, 307, 309).

2. Procédé selon la revendication 1, **caractérisé en ce que**
le nombre d'états du véhicule (301, 303, 305, 307, 309) comprend au moins deux des états du véhicule suivants (301, 303, 305, 307, 309) : « arrêt » (309), « démarrage » (307),
« accélération » (301) et « freinage » (305), dans lequel, lors d'une activation de l'état de véhicule « démarrage » (307), au moins un freinage du véhicule est déclenché et le véhicule est déplacé avec une position minimale prédéterminée et/ou une position maximale prédéterminée de la pédale d'accélération.

3. Procédé selon l'une des revendications 1 ou 2, **caractérisé en ce que**,
lors de l'activation de l'état de voile (303) par le modèle de conducteur, les étapes suivantes sont effectuées :
a) Détermination d'une courbe de performance cible (211) pour le véhicule,
b) Détermination d'une bande de tolérance pour la courbe de performance cible (211), la bande de tolérance étant limitée par une ligne limite supérieure (213) et une ligne limite inférieure (215), la ligne limite supérieure (213) étant déterminée à l'aide d'un tracé de la courbe de performance cible (211) plus une valeur de tolérance supérieure prédéterminée, et la ligne limite inférieure (215) étant déterminée à l'aide d'un tracé de la courbe de performance cible (211), moins une valeur de tolérance inférieure prédéterminée,
c) Détermination d'une caractéristique attendue (219) pour une performance attendue du véhicule dans le futur en extrapolant une évolution de la performance du véhicule à un réglage actuel du véhicule pour une fenêtre de prédiction ayant une longueur temporelle prédéterminée, les conditions d'activation de l'autre état de véhicule (301, 303, 305, 307, 309) comprennent le fait que caractéristique attendue (219) croise au moins l'une de la ligne limite supérieure (213) et de la ligne limite inférieure (215) de la bande de tolérance à l'intérieur de la fenêtre de prédiction temporelle.

4. Procédé selon la revendication 3, **caractérisé en ce que**
dans le cas où la caractéristique attendue (219) coupe la ligne limite supérieure (213), un état de véhicule (301, 303, 305, 307, 309) est débloqué, dans lequel un frein du véhicule est activé, et
pour le cas où la caractéristique attendue (219) coupe la ligne limite inférieure (213), un état de véhicule (301, 303, 305, 307, 309) est débloqué dans lequel une propulsion du véhicule est activée pour accélérer.

5. Procédé selon l'une quelconque des revendications 3 à 4, **caractérisé en ce que**
les conditions d'activation suivantes de l'état de véhicule Arrêt (309) doivent être remplies : la vitesse prédéfinie correspond à « 0 » et la vitesse actuelle est inférieure à une valeur seuil d'immobilisation prédéfinie, et/ou les conditions d'activation suivantes de l'état de véhicule suivantes Freinage (305) doivent être remplies : la valeur d'accélération actuelle correspond à « 0 », l'activation du frein du véhicule est déverrouillée et le frein est ouvert, et/ou
les conditions d'activation suivantes de l'état de véhicule Accélération (301) doivent être remplies: l'activation de l'entraînement du véhicule permettant d'accélérer est déclenchée, la vitesse prédéfinie est supérieure à une vitesse de rampage prédéfinie, et/ou
les conditions d'activation de l'état de véhicule suivantes Démarrage (307) doivent être remplies : la vitesse prédéfinie est supérieure à « 0 » ou le frein est ouvert.

6. Procédé selon l'une des revendications 1 à 5, **caractérisé en ce que**
l'au moins une commande de contrôle associée à un état de véhicule respectif déclenche un régulateur de pédale d'au moins une pédale du véhicule.

7. Procédé selon l'une des revendications 1 à 5, **caractérisé en ce que**,
l'au moins une commande de contrôle associée à un état de véhicule respectif déclenche un régulateur de pédale d'une seule pédale du véhicule.

8. Procédé selon l'une des revendications 1 à 7, **caractérisé en ce qu'**
il est possible d'activer ou de désactiver une mise en oeuvre du véhicule en utilisant les états de véhicule (301, 303, 305, 307, 309) en cours de mise en oeuvre du véhicule.

9. Procédé selon la revendication 8, **caractérisé en ce que**
lors d'un passage de l'état de voile (303) à un autre état du véhicule, une position définie de la pédale d'accélérateur et/ou de la pédale de frein est évaluée comme valeur de départ.

10. Procédé selon l'une des revendications 1 à 9, **caractérisé en ce que**
le procédé est mis en oeuvre en utilisant une horloge de contrôle qui impose un intervalle de temps minimum pour effectuer un changement d'un état de véhicule (301, 303, 305, 307, 309) à un autre état de véhicule (301, 303, 305, 307, 309), et
au moins une horloge de contrôle se situe entre un passage d'un état de véhicule (301, 303, 305, 307, 309) à l'état de voile (303) et de l'état de voile (303) à un autre état de véhicule (301, 303, 305, 307, 309).

11. Procédé selon l'une des revendications 1 à 10,
**caractérisé en ce que**, dans le cas où un véhicule se trouve dans l'état de véhicule « Arrêt » (309), une pédale de frein du véhicule est déplacée à une valeur minimale prédéterminée afin d'activer une fonction de Démarrage/Arrêt.

12. Dispositif de contrôle (400) pour contrôler un véhicule sur un banc d'essai, dans lequel
le dispositif de contrôle comprend au moins une unité de calcul (401), l'au moins une unité de calcul comprenant :
un module de conducteur (403) pour activer un état de véhicule (301, 303, 305, 307, 309) d'un véhicule parmi une pluralité d'états de véhicule (301, 303, 305, 307, 309), configuré pour comparer un état actuel du véhicule avec au moins une condition de sélection prédéfinie pour un état de véhicule respectif (301, 303, 305, 307, 309), à sélectionner et à activer un état de véhicule respectif (301, 303, 305, 307, 309) en fonction de la comparaison, dans lequel
le nombre d'états du véhicule (301, 303, 305, 307, 309) comprend au moins un premier état de véhicule (301, 303, 305, 307, 309) et un deuxième état de véhicule (301, 303, 305, 307, 309), dans lesquels
le module de conducteur (403) est en outre configuré pour
effectuer une pluralité de changements entre un état de véhicule actuellement activé (301, 303, 305, 307, 309) et au moins un autre état de véhicule (301, 303, 305, 307, 309) et
pour que le module de conducteur (403) active un état de voile (303) pour au moins un changement de la pluralité de changements avant une activation quelconque de l'autre état de véhicule (301, 303, 305, 307, 309), dans lequel le véhicule glisse, un module de déclenchement (405) configuré pour valider, lorsque le module de conduite active un état respectif du véhicule (301, 303, 305, 307, 309), au moins une commande de contrôle associée à l'état du véhicule (301, 303, 305, 307, 309) pour modifier un réglage du véhicule, et
pour activer l'état de voile (303) à chaque changement de la pluralité de changements ou sensiblement à chaque changement de la pluralité de changements, en particulier à l'exception d'un premier changement et d'un dernier changement d'un trajet respectif du véhicule, avant une activation respective de l'autre état de véhicule (301, 303, 305, 307, 309).

13. Utilisation d'un dispositif de contrôle selon la revendication 12 pour la mise en oeuvre d'un essai de fonctionnement pour un véhicule.

14. Un produit de programme informatique comprenant des moyens de code de programme qui configurent un ordinateur pour exécuter toutes les étapes selon au moins un procédé des revendications 1 à 11 lorsque les moyens de code de programme sont exécutés sur un ordinateur.
